# FASCICULE DE BREVET EUROPEEN

(11) **EP 3 029 420 B1**
(45) Date de publication et mention de la délivrance du brevet: **22.01.2020**
(21) Numéro de dépôt: 15197429.2
(22) Date de dépôt: 02.12.2015
(51) Int. Cl.: G01C 21/00, G08G 5/00, G01C 23/00, G06F 3/01, G09B 9/30

(54) **SYSTEME DE VISUALISATION SYNTHETIQUE COMPRENANT DES MOYENS D'ADAPTATION DU PAYSAGE AFFICHE**
SYNTHETISCHES ANZEIGEVERFAHREN, DAS MITTEL ZUR ANPASSUNG DER ANGEZEIGTEN LANDSCHAFT UMFASST
SYNTHETIC DISPLAY SYSTEM COMPRISING MEANS FOR ADAPTING THE DISPLAYED LANDSCAPE

(30) Priorité: 05.12.2014 FR 1402781
(43) Date de publication de la demande: 08.06.2016
(73) Titulaire: THALES, 92400 Courbevoie (FR)
(72) Inventeur: SERVANTIE, Xavier, 33187 Le Haillan Cedex (FR); POISSON, Didier, 33187 Le Haillan Cedex (FR)
(74) Mandataire: Bréda, Jean-Marc

(56) Documents cités:
- EP-A1- 2 541 210
- US-A1- 2014 267 723
- US-B1- 8 159 416
- J J ( Trey ET AL: "Design and testing of an unlimited field-of-regard synthetic vision head-worn display for commercial aircraft surface operations", , 1 janvier 2007 (2007-01-01), XP055216084, Extrait de l'Internet: URL:http://ntrs.nasa.gov/archive/nasa/casi .ntrs.nasa.gov/20070018771.pdf [extrait le 2015-09-24]

## Description

Le domaine de l'invention est celui des systèmes de visualisation comportant des moyens d'afficher une image synthétique du paysage extérieur. L'invention s'applique tout particulièrement au domaine aéronautique mais peut s'appliquer à tout véhicule comportant des moyens d'afficher une telle image synthétique.

Les aéronefs modernes possèdent généralement un système de vision synthétique dit « SVS », acronyme de « Synthetic Vision System ». Ce système permet de présenter à l'équipage une image synthétique du paysage extérieur comportant généralement des informations sur le pilotage ou la navigation. Un système SVS comporte une base de données cartographique représentative du terrain survolé, un système de géolocalisation, des moyens de calcul électroniques et un ou plusieurs dispositifs de visualisation implantés dans le cockpit de l'aéronef. Le système de géolocalisation est du type « GPS », acronyme de « Global Positioning System ». Il peut être couplé avec le système inertiel de l'appareil. L'ensemble du système de géolocalisation fournit au moins les paramètres suivants : position de l'aéronef en latitude, longitude et altitude et orientation de l'aéronef en tangage, roulis et cap et enfin, précision de la localisation.

Généralement, l'image est affichée sur les écrans de visualisation qui se trouvent en face avant du tableau de bord de l'aéronef. C'est une vue tridimensionnelle de l'extérieur représentée de la façon la plus réaliste possible. Le point de vue affiché est dans l'axe de l'appareil. Cette image est très attrayante pour l'équipage dans la mesure où elle lui fournit une vue proche de la réalité de son environnement et en particulier de certains éléments fondamentaux pour la navigation comme les pistes d'atterrissage.

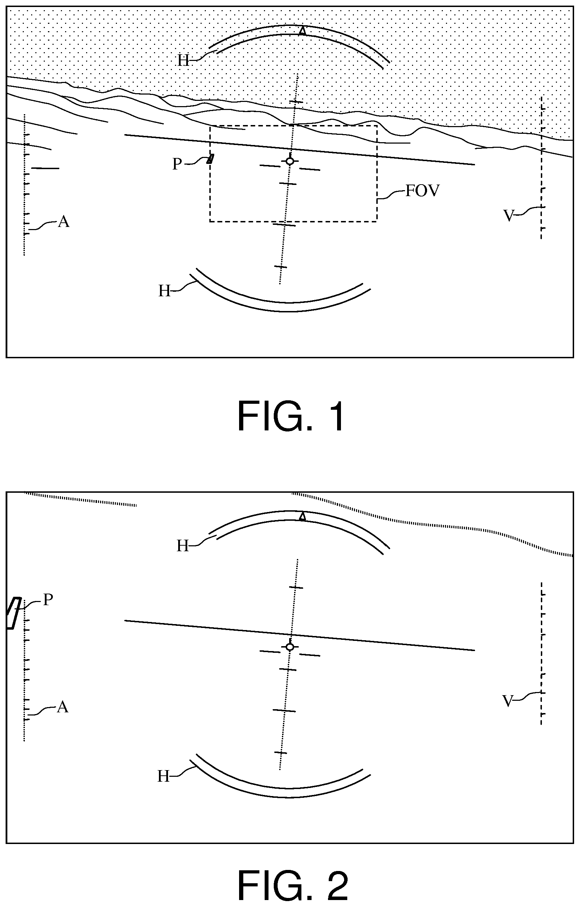

La représentation est nécessairement associée à un angle de vision, aussi connu sous l'acronyme « FOV » signifiant « Field Of View ». Ce champ de vision est centré sur la direction de navigation du véhicule. Le choix du FOV n'est pas nécessairement simple. En effet, si le FOV est très important, les détails éloignés ont des représentations de petites dimensions, à peine visibles. Si, au contraire, le FOV est faible, les détails intéressants sont de taille significative mais peuvent rapidement sortir du champ s'ils ne sont pas situés au voisinage de l'axe de navigation de l'appareil. Ce problème est exposé sur les figures 1 et 2 qui représentent une vue synthétique tridimensionnelle d'un paysage comportant une symbologie qui comporte classiquement un horizon artificiel H et des barres verticales indiquant l'altitude A et la vitesse V de l'aéronef. Le paysage comporte une piste d'atterrissage P qui est en gras sur les différentes figures. Sur la figure 1, le FOV est important. La piste d'atterrissage P apparaît comme un quadrilatère allongé de petites dimensions, pas nécessairement facile à distinguer par l'utilisateur. Sur la figure 2, le FOV est réduit. Il correspond au rectangle en pointillés de la figure 1. La piste d'atterrissage P est de dimensions plus grandes mais se retrouve en bord de champ et n'est pas nécessairement plus facile à identifier pour le pilote.

Pour pallier ces inconvénients, différentes solutions techniques ont été proposées. Ainsi, le brevet US 8 159 416 intitulé « Synthetic vision dynamic field of view » décrit un système de visualisation pour aéronef dans lequel les dimensions du champ de vision dépendent, de façon automatique, des paramètres de navigation selon, par exemple, que l'aéronef est au sol ou en vol, sa vitesse variant alors considérablement. Cette solution ne règle pas le problème des objets situés hors champ de vision. Le brevet US 7 218 245 intitulé « Head-down aircraft attitude display and method for displaying schematic and terrain date symbology » décrit un système de visualisation pour aéronef permettant d'afficher une symbologie simplifiée représentative du terrain et une symbologie référencée par rapport à la trajectoire de l'aéronef. Là encore, cette solution ne résout pas le problème de la présentation des objets tridimensionnels de petites dimensions.

Il existe également des systèmes où la direction de l'affichage de la visualisation synthétique correspond à l'orientation de la tête du pilote, comme par exemple dans le document EP2541210.

Le système de visualisation synthétique pour véhicule selon l'invention ne présente pas ces inconvénients. Dans ce système de visualisation, le champ de vision des informations de terrain n'est plus nécessairement centré sur la direction de navigation du véhicule. On peut ainsi maintenir un objet intéressant dans le champ de vision sans réduire de façon drastique sa taille.

Plus précisément, l'invention a pour objet un système de visualisation synthétique pour véhicule selon la revendication 1.

Avantageusement, l'angle entre la direction d'affichage et la direction de navigation est une fonction croissante du taux de virage du véhicule.

Avantageusement, la direction d'affichage est dirigée vers une destination déterminée.

Avantageusement, la direction d'affichage est dirigée vers un objet déterminé.

Avantageusement, la représentation d'une partie ou de la totalité des principaux paramètres dudit véhicule est centrée sur la direction de navigation.

Avantageusement, le système de visualisation synthétique comporte une interface homme-machine dont la fonction est de recentrer instantanément la direction de visualisation sur la direction de navigation.

Avantageusement, le véhicule est un aéronef suivant un plan de vol.

L'invention sera mieux comprise et d'autres avantages apparaîtront à la lecture de la description qui va suivre donnée à titre non limitatif et grâce aux figures annexées parmi lesquelles :
La figure 1 représente une vue synthétique tridimensionnelle d'un paysage comportant une symbologie selon un premier FOV large ;
La figure 2 représente une vue synthétique tridimensionnelle d'un paysage comportant une symbologie selon un second FOV étroit ;
La figure 3 représente le principe de fonctionnement d'un système de visualisation selon l'invention ;
La figure 4 représente une vue synthétique tridimensionnelle d'un paysage comportant une symbologie S selon l'invention.

Le système de visualisation synthétique géolocalisé selon l'invention peut s'appliquer à tous types de véhicule possédant un système de géolocalisation et une base de données cartographiques. Il est cependant particulièrement bien adapté aux aéronefs dans la mesure où la reconnaissance d'objets ou de positions particulières est fondamentale pour la navigation de ces appareils.

Le système de visualisation synthétique ou SVS embarqué sur aéronef selon l'invention comporte au moins une base de données cartographique, des moyens de géolocalisation, des moyens électroniques permettant de calculer une représentation des principaux paramètres de l'aéronef, un calculateur graphique et au moins un dispositif de visualisation. Les moyens de géolocalisation sont, à titre d'exemple, de type « GPS », acronyme de « Global Positioning System » couplés/hybridés ou non avec des centrales inertielles.

Dans les aéronefs modernes, le système comporte généralement plusieurs dispositifs de visualisation disposés dans le cockpit affichant les paramètres nécessaires au pilotage et à la navigation et plus généralement, à l'accomplissement de la mission. Ces dispositifs de visualisation représentent en particulier une vue synthétique tridimensionnelle du terrain survolé. Cette vue comporte généralement une symbologie d'aide au pilotage et à la navigation. Elle comporte classiquement un horizon artificiel donnant l'attitude de l'appareil et des indicateurs donnant l'altitude et la vitesse de l'aéronef.

Ces informations sont affichées dans un champ de vision ou FOV déterminé. Généralement, les dimensions de ce champ sont réglables de façon à « zoomer » sur le paysage extérieur. Cet agrandissement du champ de vision peut être réalisé soit manuellement par le pilote, soit automatiquement en fonction de différents paramètres comme la phase de vol, la vitesse de l'appareil ou son altitude.

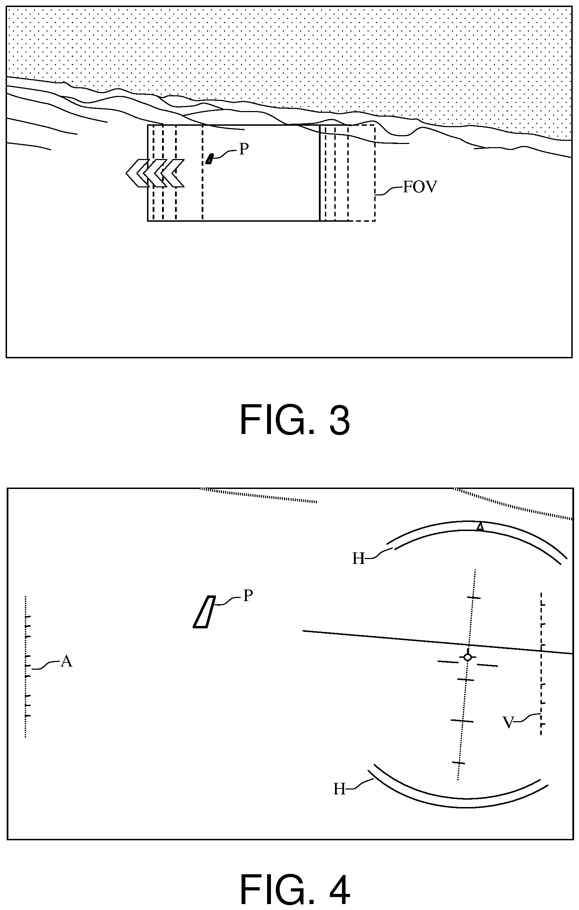

Classiquement, ce champ de vision est centré sur la direction de navigation du véhicule. Dans le système selon l'invention, des moyens de réglage permettent d'ajuster la direction d'affichage dans une direction différente de la direction de navigation déterminée du véhicule, lesdits moyens de réglage étant manuels ou automatiques. Les figures 3 et 4 illustrent cet ajustement. La figure 3 représente un paysage synthétique de grandes dimensions. Les fenêtres FOV délimitées par les différents rectangles représentent la partie du terrain effectivement affichée par le dispositif de visualisation dans un champ de vision réduit. Les rectangles successifs en pointillés représentent les variations de la fenêtre et le rectangle en traits pleins représente la fenêtre FOV effectivement sélectionnée. Les chevrons représentent le sens du déplacement de la fenêtre avant la sélection. Ainsi, en déplaçant cette fenêtre, il est possible de la centrer sur l'objet que l'on souhaite avoir dans le champ de vision. Dans le cas présent, il s'agit d'une piste d'atterrissage P. La figure 4 représente le champ de vision effectivement affiché. On note que, dans cette représentation, la piste P est de dimensions plus importantes et qu'elle est bien centrée, permettant ainsi une bien meilleure vision. Une partie de la symbologie de navigation S peut rester centrée sur la direction de navigation. C'est notamment le cas de l'horizon artificiel H. Dans le cas de la figure 4, cette partie H de symbologie attachée à la direction de navigation est à droite de cette figure.

Il est à noter que le déplacement de la direction d'affichage peut se faire dans un plan horizontal mais également dans un plan vertical ou dans une combinaison des deux.

Lorsque les moyens de réglage sont manuels, le pilote peut utiliser toute interface homme-machine pour régler cette direction de navigation. Ces moyens sont, par exemple, des boutons rotatifs, un pavé tactile ou une surface tactile transparente posée sur l'écran de visualisation, le déplacement du FOV étant assuré par un geste particulier ou tout autre moyen de commande.

Lorsque les moyens de réglage sont automatiques, la direction d'affichage est une fonction d'un paramètre de pilotage ou de navigation. A titre d'exemples non limitatifs, la direction de navigation peut être une fonction croissante du taux de virage du véhicule ou être dirigée vers une destination déterminée ou un objet déterminé comme représenté dans les différentes figures. La mise en œuvre de cet automatisme est assurée par le ou les calculateurs de bord de l'aéronef.

Lorsque la direction de navigation est différente de la direction de la visualisation, un moyen simple et rapide permet au pilote de recentrer la direction de visualisation vers la direction de navigation. Ce moyen peut être une interface homme-machine soit mécanique, soit graphique. Ce recentrage doit pouvoir être effectué par l'utilisateur le plus rapidement possible.

## Revendications

1. Système de visualisation synthétique pour véhicule, ledit véhicule ayant une direction de navigation déterminée, ledit système comportant au moins :
- une base de données cartographique représentative du terrain parcouru par le véhicule,
- des moyens de géolocalisation dudit véhicule,
- des moyens électroniques permettant de calculer une représentation des principaux paramètres dudit véhicule ;
- des moyens de génération graphique permettant de générer une représentation synthétique tridimensionnelle dudit terrain et ;
- un dispositif de visualisation affichant ladite représentation synthétique tridimensionnelle dans un champ de vision déterminé et dans une direction d'affichage déterminée,
**caractérisé en ce que** le système de visualisation synthétique comporte des moyens de réglage permettant d'ajuster la direction d'affichage dans une direction différente de la direction de navigation déterminée du véhicule, lesdits moyens de réglage étant automatiques, la direction d'affichage étant une fonction d'un paramètre de pilotage ou de navigation.

2. Système de visualisation synthétique pour véhicule selon la revendication 1, **caractérisé en ce que** l'angle entre la direction d'affichage et la direction de navigation est une fonction croissante du taux de virage du véhicule.

3. Système de visualisation synthétique pour véhicule selon la revendication 1, **caractérisé en ce que** le système de visualisation synthétique comporte une interface homme-machine dont la fonction est de recentrer instantanément la direction de visualisation sur la direction de navigation.

4. Système de visualisation synthétique pour véhicule selon l'une des revendications précédentes, **caractérisé en ce que** le véhicule est un aéronef suivant un plan de vol.

## Patentansprüche

1. Synthetisches Anzeigesystem für ein Fahrzeug, wobei das Fahrzeug eine bestimmte Navigationsrichtung besitzt, wobei das System mindestens Folgendes beinhaltet:
- eine kartografische Datenbank, welche das durch das Fahrzeug durchquerte Gelände darstellt,
- Mittel zur Geolokalisierung des Fahrzeugs,
- elektronische Mittel, die dazu dienen, eine Darstellung der Hauptparameter des Fahrzeugs zu berechnen;
- Mittel zur Grafikerzeugung, welche dazu dienen, eine synthetische dreidimensionale Darstellung des Geländes zu erzeugen; und
- eine Anzeigevorrichtung, welche die synthetische dreidimensionale Darstellung in einem bestimmten Sichtfeld und in einer bestimmten Anzeigerichtung darstellt,
**dadurch gekennzeichnet, dass** das synthetische Anzeigesystem Mittel zum Einstellen beinhaltet, welche dazu dienen, die Anzeigerichtung in eine von der bestimmten Navigationsrichtung des Fahrzeugs abweichenden Richtung zu justieren, wobei die Einstellungsmittel automatisch sind, wobei die Anzeigerichtung eine Funktion eines Steuerungs- oder Navigationsparameters ist.

2. Synthetisches Anzeigensystem für ein Fahrzeug nach Anspruch 1, **dadurch gekennzeichnet, dass** der Winkel zwischen der Anzeigerichtung und der Navigationsrichtung eine ansteigende Funktion der Kurvenrate des Fahrzeugs ist.

3. Synthetisches Anzeigensystem für ein Fahrzeug nach Anspruch 1, **dadurch gekennzeichnet, dass** das synthetische Anzeigesystem eine Mensch-Maschine-Schnittstelle beinhaltet, deren Funktion darin besteht, die Anzeigerichtung augenblicklich neu auf die Navigationsrichtung zu zentrieren.

4. Synthetisches Anzeigensystem für ein Fahrzeug nach einem der vorhergehenden Ansprüche, **dadurch gekennzeichnet, dass** das Fahrzeug ein Luftfahrzeug ist, welches einem Flugplan folgt.

## Claims

1. Synthetic display system for a vehicle, said vehicle having a predetermined navigation direction, said system comprising at least:
- a map database which represents the ground travelled by the vehicle,
- means for geolocating the vehicle,
- electronic means which enable a representation of the main parameters of the vehicle to be calculated;
- graphic generation means which enable a three-dimensional synthetic representation of the ground to be generated, and;
- a display device which displays the three-dimensional synthetic representation in a predetermined field of vision and in a predetermined display direction,
**characterised in that** the synthetic display system comprises adjustment means which enable the display direction to be adjusted in a direction different from the predetermined navigation direction of the vehicle, the adjustment means being automatic, the display direction being a function of a control or navigation parameter.

2. Synthetic display system for a vehicle according to claim 1, **characterised in that** the angle between the display direction and the navigation direction is an increasing function of the turn rate of the vehicle.

3. Synthetic display system for a vehicle according to claim 1, **characterised in that** the synthetic display system comprises a man/machine interface whose function is to instantaneously recentre the display direction onto the navigation direction.

4. Synthetic display system for a vehicle according to any one of the preceding claims, **characterised in that** the vehicle is an aircraft following a flight plan.
